# EUROPÄISCHE PATENTSCHRIFT

(11) **EP 0 667 490 B1**
(45) Veröffentlichungstag und Bekanntmachung des Hinweises auf die Patenterteilung: **26.03.1997**
(21) Anmeldenummer: 95100703.8
(22) Anmeldetag: 19.01.1995
(51) Int. Cl.: F23G 5/50, F23G 5/08

(54) **Verfahren zum Verbrennen von Brenngut, insbesondere Müll**
Method for combustion of fuel, especially refuse
Méthode pour combustion de combustible, particulièrement d'ordures ménagères

(30) Priorität: 11.02.1994 DE 4404418
(43) Veröffentlichungstag der Anmeldung: 16.08.1995
(73) Patentinhaber: MARTIN GmbH für Umwelt- und Energietechnik, D-80807 München (DE)
(72) Erfinder: Martin, Johannes, Dipl.-Ing., D-81929 München (DE); Zahlten, Michael, Dipl.-Ing., D-22399 Hamburg (DE)
(74) Vertreter: Zmyj, Erwin, Dipl.-Ing., Dipl.-Wirtsch.-Ing.

(56) Entgegenhaltungen:
- EP-A- 0 427 231
- DE-A- 3 512 810
- US-A- 4 300 460

## Beschreibung

Die Erfindung betrifft ein Verfahren zum Verbrennen von Brenngut, insbesondere Müll und Abfall, auf einem Feuerungsrost, bei dem das Brenngut getrocknet, gezündet, verbrannt und die Schlacke in einer anschließenden Schmelzstufe durch Fremdenergie weiter erhitzt, geschmolzen und dann abgeführt wird. Eine derartiger Verfahren ist durch die EP-A-0 427 231 bekannt.

Bei einem bekannten Verfahren dieser Art (DE 39 37 866 A1) wird die Schlacke im Bereich der Ausbrandstufe, in welcher die Schlacke bereits eine verhältnismäßig niedrige Temperatur aufweist, nachdem das Brenngut fast vollständig ausgebrannt ist, durch Fremdbrenner erhitzt und geschmolzen. Dabei ist es notwendig, daß die Schlacke, nachdem sie nur noch geringe Bestandteile an brennbarem Material enthält und somit schon weitgehend ausgekühlt ist, auf eine Temperatur von etwa 1.400° erhitzt werden muß, was einen sehr hohen Energieaufwand durch die Fremdbrenner erfordert.

Aufgabe der Erfindung ist es, die für das Einschmelzen der Schlacke notwendige Fremdenergie weitgehend zu vermindern.

Diese Aufgabe wird bei einem Verfahren der eingangs erläuterten Art erfindungsgemäß gelöst durch eine Verbrennungsregelung auf dem Feuerungsrost, die zu einer Erhitzung des im Abbrand befindlichen Brenngutes bis nahe unterhalb des Schmelzpunktes der hierbei entstehenden Schlacke vor Erreichen der Schmelzstufe führt. Die Verbrennungsregelung bzw. Verbrennungsführung wird so durchgeführt, daß das Brenngut, wenn es in die Schmelzstufe eintritt, nahezu bereits Schmelztemperatur aufweist, wodurch die notwendige Fremdenergie zur Erzielung des Schmelzvorganges wesentlich reduziert werden kann. Das Brenngut muß wegen der Gefahr einer Zerstörung des Feuerungsrostes vor Eintreten in die Schmelzstufe noch unterhalb des Schmelzpunktes der Schlacke gehalten werden, weil sonst flüssige Schlacke nicht nur zu einer Überhitzung der den Feuerungsrost bildenden Roststäbe, sondern auch zu einer Behinderung bzw. Blockierung der Bewegbarkeit der Roststäbe führen würde. Hierdurch wird die Qualität der Schlacke verbessert, wobei die noch vorhandenen Schadstoffe entweder in die Matrix des Schlackenkorns in der Weise eingebunden wird, daß sie nicht mehr ausgelaugt werden können oder die Schadstoffe werden in die Gasphase überführt, in der sie den bekannten Behandlungsverfahren unterworfen werden.

Um eine Zerstörung des Feuerungsrostes durch sich bildende flüssige Schlacke mit Sicherheit zu vermeiden, empfiehlt es sich, die Erhitzung der sich aus dem im Abbrand befindlichen Brenngutes bildenden Schlacke auf ungefähr 50 bis 100°C unterhalb des im Mittel sich ergebenden Schmelzpunktes der Schlacke durchzuführen.

Die Verbrennungsregelung kann in vorteilhafter Weise eine Sauerstoffanreicherung der Verbrennungsluft umfassen. Vorteilhaft in diesem Zusammenhang ist auch die Tatsache, daß die Verbrennungsregelung die Vorwärmung der Verbrennungsluft umfassen kann.

Wenn in weiterer vorteilhafter Ausgestaltung der Erfindung die Verbrennungsregelung durch zumindest eine Infrarotkamera überwacht wird, so ist es möglich die Verbrennungsregelung bzw. Verbrennungsführung so zu gestalten, daß stets optimale Verbrennungszustände auf dem Feuerungsrost herrschen, d.h. durch diese Überwachung kann die Verbrennungsführung durch Zuführung sauerstoffreicher Verbrennungsluft bzw. vorgewärmter Verbrennungsluft so gehandhabt werden, daß mit Sicherheit die Erzielung der gewünschten Brennguttemperatur unterhalb des Schmelzpunktes der Schlacke vor Eintritt in die Schmelzstufe gewährleistet ist.

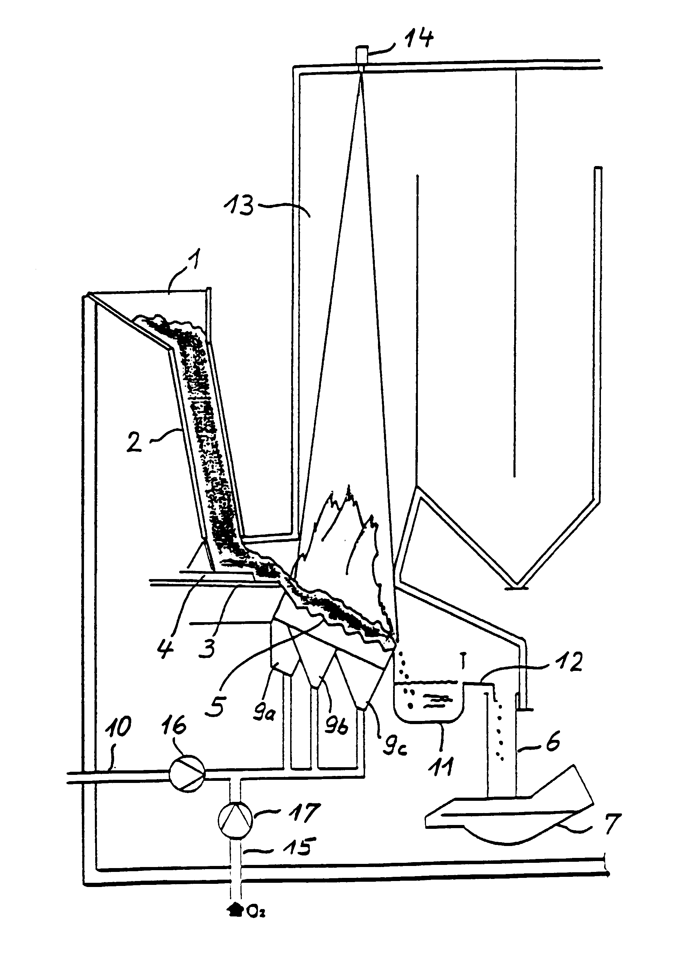

Die Erfindung wird nachfolgend anhand einer in der Zeichnung in schematischer Weise dargestellten Feuerungsanlage beispielsweise erläutert. Die einzige Figur zeigt einen Längsschnitt durch eine Feuerungsanlage.

Das zu verbrennende Brenngut, insbesondere Müll, wird über einen Aufgabetrichter 1, eine Aufgabeschurre 2 und einen Aufgabetisch 3, auf dem Beschickkolben 4 hin- und herbewegbar sind, auf das vordere Ende eines geneigt angeordneten Feuerungsrostes 5 aufgegeben und durch Schürbewegungen der aus einzelnen Roststäben aufgebauten Roststufen ans hintere Ende des Feuerungsrostes 5 bewegt. Dabei wird bei den bisher üblichen Verbrennungsverfahren das Brenngut im Bereich der Aufgabezone zunächst getrocknet, gezündet, dann in einen intensiven Abbrand versetzt bis schließlich am Ende des Feuerungsrostes die ausgebrannte Schlacke in einen Schlackenabfallschacht 6 fällt, an dessen unterem Ende ein mit Wasser gefüllter Entschlacker 7 angeordnet ist. Die zur Verbrennung notwendige Luft wird dem Brenngut von unten über einzelne Unterwindzonen 9a bis 9c über eine Verbrennungsluftzuführungsleitung 10 zugeführt. Dabei wird im hinteren Bereich des Feuerungsrostes durch die Unterwindzone 9c soviel Luft zugeführt, daß die fast vollständig ausgebrannte Schlacke vor der Übergabe in den Schlackenfallschacht 6 sehr weit abgekühlt ist.

Bei dem erfindungsgemäßen Verfahren wird abweichend zu dem soeben beschriebenen bekannten Verfahren die Verbrennungsregelung auf dem Feuerungsrost durch verschiedene noch zu beschreibende Maßnahmen so durchgeführt, daß die sich aus dem im Abbrand befindlichen Brenngut am Ende des Feuerungsrostes bildende Schlacke eine Temperatur aufweist, die nahe unterhalb des Schmelzpunktes der sich hierbei bildenden Schlacke aufweist. Diese so erhitzte Schlacke fällt dann nicht, wie bisher üblich, in einen Schlackenfallschacht 6, sondern zunächst in einen Schmelztiegel 11, in welchem die Schlacke durch Fremdenergie verflüssigt wird. Die flüssige Schlacke gelangt dann über einen Überlauf 12 in den Schlackenfallschacht 6.

Um diesen Zustand zu erreichen, wird die Verbrennungsluftmenge und ihre Verteilung in Längsrichtung und ggf. auch in Querrichtung des Feuerungsrostes entsprechend eingestellt und der Verbrennungsablauf durch eine vorzugsweise am oberen Ende des Abgaszuges 13 angeordnete Infrarotkamera 14 überwacht. Mit Hilfe dieser Infrarotkamera erhält man ein genaues Bild über das Abbrandverhalten des Brenngutes auf dem Feuerungsrost, so daß die notwendigen Regelungsmaßnahmen in Abhängigkeit von dem durch die Infrarotkamera gelieferten Bild und den sich daraus ergebenden Temperaturverteilungen durchgeführt werden können. Dabei wird insbesondere darauf geachtet, daß die Schlacke nicht wie bisher auskühlt, sondern auf dem gewünschten Temperaturniveau gehalten wird. Vorzugsweise wird zur Erreichung dieses Zieles der Verbrennungsluft durch eine schematisch angedeutete und in die Verbrennungsluftzuführungsleitung 10 einmündende Sauerstoffleitung 15 reiner Sauerstoff beigemischt. Zur Einstellung des entsprechenden Sauerstoffgehaltes sind sowohl in der Verbrennungsluftzuführungsleitung 10 als auch in der Sauerstoffleitung 15 entsprechende Regelorgange 16 und 17 vorgesehen. Je nach Zusammensetzung des zu verbrennenden Brenngutes kann es auch vorteilhaft sein die zugeführte Verbrennungsluft vorher über einen nicht dargestellten Luftvorwärmer aufzuheizen.

## Patentansprüche

1. Verfahren zum Verbrennen von Brenngut, insbesondere Müll und Abfall auf einem Feuerungsrost, bei dem das Brenngut getrocknet, gezündet, verbrannt und die Schlacke in einer anschließenden Schmelzstufe durch Fremdenergie weiter erhitzt, geschmolzen und dann abgeführt wird, **gekennzeichnet durch** eine Verbrennungsregelung auf dem Feuerungsrost, die zu einer Erhitzung des im Abbrand befindlichen Brenngutes bis nahe unterhalb des Schmelzpunktes der hierbei entstehenden Schlacke vor Erreichen der Schmelzstufe führt.

2. Verfahren nach Anspruch 1, **dadurch gekennzeichnet**, daß die Erhitzung der sich aus dem im intensiven Abbrand befindlichen Brenngut bildenden Schlacke auf ungefähr 50 bis 100°C unterhalb des im Mittel sich ergebenden Schmelzpunktes der Schlacke durchgeführt wird.

3. Verfahren nach Anspruch 1 oder 2, **dadurch gekennzeichnet**, daß die Verbrennungsregelung eine Sauerstoffanreicherung der Verbrennungsluft umfaßt.

4. Verfahren nach einem der Ansprüche 1 bis 3, **dadurch gekennzeichnet**, daß die Verbrennungsregelung die Vorwärmung der Verbrennungsluft umfaßt.

5. Verfahren nach einem der Ansprüche 1 bis 4, **dadurch gekennzeichnet**, daß die Verbrennungsregelung durch zumindest eine Infrarotkamera überwacht wird.

## Claims

1. Method for the combustion of fuel, especially refuse and waste on a grate, in which the fuel is dried, ignited, burnt and, in a subsequent melting stage, the slag is further heated by external energy, melted and then removed, characterised by combustion control on the grate, leading to the burnt-out fuel being heated to almost below the melting point of the resulting slag before it reaches the melting stage.

2. Method according to claim 1, characterised in that the slag formed from the intensively burnt-out fuel is heated to approximately 50 to 100°C below the average melting point of the slag.

3. Method according to claim 1 or claim 2, characterised in that the combustion control includes enriching the combustion air with oxygen.

4. Method according to one of claims 1 to 3, characterised in that the combustion control includes preheating the combustion air.

5. Method according to one of claims 1 to 4, characterised in that the combustion control is monitored by at least one infrared camera.

## Revendications

1. Procédé pour brûler une matière combustible, notamment des ordures et des déchets sur une grille de foyer, selon lequel la matière combustible est séchée, enflammée et brûlée et les scories sont ensuite chauffées et fondues dans une étape ultérieure de fusion au moyen d'une énergie externe et sont ensuite évacuées, procédé caractérisé par une régulation de combustion sur la grille de foyer, qui assure un chauffage de la matière combustible soumise au brûlage jusqu'à une température un peu inférieure au point de fusion des scories ainsi produites avant l'atteinte de la zone de fusion.

2. Procédé selon la revendication 1, caractérisé en ce que le chauffage des scories se formant à partir de la matière combustible soumise à un brûlage intensif est effectué à une température inférieure d'environ 50 à 100° C au point de fusion des scories qui est obtenu en moyenne.

3. Procédé selon une des revendications 1 ou 2, caractérisé en ce que la régulation de combustion comprend un enrichissement en oxygène de l'air de combustion.

4. Procédé selon une des revendications 1 à 3, caractérisé en ce que la régulation de combustion comprend le préchauffage de l'air de combustion.

5. Procédé selon une des revendications 1 à 4, caractérisé en ce que la régulation de combustion est contrôlée par au moins une caméra à infrarouges.
